# FASCICULE DE BREVET EUROPEEN

(11) **EP 0 550 303 B1**
(45) Date de publication et mention de la délivrance du brevet: **07.01.1998**
(21) Numéro de dépôt: 92403386.3
(22) Date de dépôt: 11.12.1992
(51) Int. Cl.: E01C 7/18, E01C 3/00

(54) **Produit à base de résidus d'incinération d'ordures ménagères, application aux corps de chaussées et obtention**
Produkt aus Rückständen von Stadtmüllverbrennung, dessen Verwendung im Strassenbaufläche und Herstellungsweise
Municipal incinerator residues product, its use in road foundations and process for obtaining it

(30) Priorité: 02.01.1992 FR 9200007
(43) Date de publication de la demande: 07.07.1993
(73) Titulaire: COLAS S.A., F-92653 Boulogne-Billancourt Cédex (FR)
(72) Inventeur: Morlot, Yves Jean Maurice, F-72450 Montfort-Le-Gesnois (FR)
(74) Mandataire: Michelet, Alain

(56) Documents cités:
- CA-A- 929 036
- GB-A- 1 415 572
- BITUMEN vol. 37, no. 4, Juillet 1975, HAMBURG DE pages 126 - 129 'TECHNISCHE BERICHTE'

## Description

La présente invention concerne la valorisation des résidus d'incinération des ordures ménagères.

Elle a plus particulièrement pour objet un produit à base de résidus d'incinération d'ordures ménagères, utile dans la construction des routes, notamment dans les corps de chaussées et le procédé d'obtention dudit produit.

Les ordures ménagères sont pour les sociétés industrielles modernes l'un des soucis principaux en matière d'environnement.

La production annuelle en France est d'environ 350 kg par habitant avant incinération et de 100 à 120 kg après traitement.

En France, on traite 20.000.000 de tonnes par an avec des moyens modernes y compris un prétriage sélectif permettant le recyclage de certains produits, le compostage, l'incinération ou encore le traditionnel enfouissement.

La présente invention concerne les résidus d'incinération d'ordures ménagères qu'elles soient ou non passées par un prétriage sélectif.

Selon la présente invention, il est prévu de traiter les résidus tels quels, issus des fours d'incinération, pour obtenir des matériaux de qualité élaborée, utiles dans la construction des routes, notamment pour la constitution de corps de chaussées jusqu'en dessous de la couche de roulement.

Dans la présente invention, on entend par corps de chaussées tant les chaussées routières et autoroutières que les pistes d'aérodromes et similaires.

Jusqu'à ce jour les résidus d'incinération d'ordures ménagères également appelés mâchefers d'incinération d'ordures ménagères sont mis dans des décharges publiques ou privées et constituent des rebuts peu utilisables.

On a tenté de les utiliser tels quels en remblais de chaussées ou en sous-couche de chaussée, mais ils présentent des propriétés médiocres et les spécialistes de la route ont rejeté la possibilité d'utiliser les mâchefers en voirie.

Selon un principe généralement admis des spécialistes dans ce domaine, la teneur en eau des mâchefers d'incinération d'ordures ménagères ne permet pas de les traiter, car cette teneur est trop importante. Comme résultat des opérations d'aspersion d'eau qui sont nécessaires dans les fours d'incinération d'ordures ménagères, la teneur en eau des mâchefers est habituellement d'environ 15%.

Pour les spécialistes cette teneur en eau d'environ 15% constitue une barrière du point de vue économique.

On a donc coutume de stocker les mâchefers d'incinération d'ordures ménagères dans des décharges qu'elles soient publiques ou privées.

Un tel stockage pose des problèmes concernant tant le coût que la place disponible.

En outre la mise en décharge détériore fortement l'environnement.

GB-A-1.415.572 décrit une composition asphaltique selon le préambule de la revendication 1 et son procédé d'obtention.

Cette composition utilise du mâchefer sec qui n'a pas été dépoussiéré. Ce mâchefer sec est enrobé avec du bitume chaud.

L'article Bitumen vol. 37 n° 4, Juillet 1975 HAMBURG DE, pages 126-129 TECHNISCHE BERICHTE page 129 alinéa 6 décrit seulement de façon très générale l'utilisation d'une émulsion de bitume dans le corps de chaussées.

La présente invention a pour objet de remédier aux inconvénients mentionnés ci-dessus et propose une solution concrète qui permet d'utiliser des produits de rebuts en tant que produits utiles.

La présente invention permet de traiter des mâchefers d'incinération d'ordures ménagères, ayant une teneur en eau d'au moins 15 %, ce qui va dans le sens contraire au principe établi.

Plus particulièrement, la présente invention a pour objet un produit destiné à la construction de corps de chaussées qui est constitué de résidus d'incinération d'ordures ménagères, enrobés avec un liant bitumineux sous la forme d'une émulsion aqueuse, et ayant une teneur en eau d'au moins 15 % en poids.

La présente invention concerne également un procédé de traitement de résidus d'incinération d'ordures ménagères pour obtenir un produit utile dans la construction des routes, en particulier dans le corps de chaussées qui comprend les étapes consistant à :
a) introduire les résidus dans un dispositif de dosage ;
b) amener les résidus dosés dans un malaxeur ;
c) incorporer à froid un liant bitumineux dans le malaxeur ;
d) malaxer l'ensemble pendant une durée suffisante pour obtenir un enrobage uniforme ;
e) décharger le produit résistant pour son utilisation ultérieure.

Le procédé de la présente invention peut également comprendre les étapes préalables consistant à :
a₁) prélever les résidus à la sortie des fours d'incinération ;
a₂) décharger le produit résultant pour son utilisation ultérieure.

Les résidus sont introduits dans le dispositif de dosage à l'état refroidi.

La présente invention concerne également les caractéristiques ci-après, considérées isolément ou selon toutes leurs combinaisons techniquement possibles:
- la teneur en liant est comprise dans la gamme d'environ 5 à 10% en poids;
- le produit renferme, en outre, du sable ou des gravillons;
- la pénétrabilité du bitume se situe dans la gamme de 30/100 à 200/100;
- la teneur en eau de l'émulsion bitumineuse est comprise entre environ 25% et environ 50% en poids;
- l'émulsion bitumineuse renferme, en outre, un additif hydraulique sous forme liquide;
- un exemple d'additif hydraulique est le gluconate de sodium.
- le produit final enrobé présente une résistance à la compression d'environ 2,4 à 3 MPa;
- le produit final enrobé est sous la forme de pastilles d'une granulométrie comprise dans la gamme d'environ 1 à 40 mm;
- lors de la mise en oeuvre du procédé, on peut incorporer, en outre, des produits pulvérulents dans les résidus d'incinération d'ordures ménagères avant l'introduction du liant;
- les produits pulvérulents sont de la chaux, du ciment, des cendres hydrauliques, des charges calcaires, des charges de roches massives, du sable, du gravier et analogues;
- le malaxage des résidus dosés avec le liant est effectué énergiquement pendant un cycle bref d'environ 10 à environ 30 secondes;
- on malaxe 100 parties de résidus d'incinération d'ordures ménagères avec 5 à 10 parties de liant.

On indique ci-après un exemple de mise en oeuvre de la présente invention.

Le traitement des mâchefers d'incinération d'ordures ménagères est réalisé dans une unité de fabrication classique à graves stabilisées. Cette unité comprend des trémies doseuses pour les mâchefers d'incinération d'ordures ménagères et éventuellement les sables ou gravillons correcteurs. Elle comprend aussi un dispositif de transfert et de dosage du liant, le liant étant fabriqué soit dans une usine spécialisée dans les liants bitumineux soit partiellement sur place au moment du traitement des mâchefers d'incinération d'ordures ménagères. Il est donc prévu, si nécessaire, une unité de fabrication in situ de tout ou partie du liant. L'unité renferme aussi un silo à pulvérulents avec un système de dosage approprié et un malaxeur vertical ou horizontal permettant le mélange intime des mâchefers d'incinération d'ordures ménagères et de leur liant de valorisation.

Après le dosage précis des mâchefers d'incinération d'ordures ménagères en incorporant 100 parties de mâchefers d'incinération d'ordures ménagères pour 5 à 10 parties de liant et ajout d'éventuels correcteurs granulométriques, l'introduction dans le malaxeur se fait, normalement, dans l'ordre suivant: tout d'abord les mâchefers d'incinération d'ordures ménagères et les correcteurs puis les éventuels additifs pulvérulents ensuite de l'eau de mouillage, si cela s'avère nécessaire et enfin le liant à émulsion aqueuse.

On procède alors à un malaxage de l'ensemble pendant un cycle de quelques secondes et on décharge le produit valorisé soit dans des camions de transport vers le site de travail, soit sur une aire de stockage temporaire avant la reprise pour le transport vers l'unité d'utilisation.

Le produit obtenu a un aspect brun noir qui tend vers le gris très foncé noir après mûrissement. La granulométrie varie entre 1 et 40 mm. Le temps de prise du produit obtenu permet une maniabilité de six heures à plusieurs jours suivant le liant choisi, permettant ainsi de moduler cette maniabilité en fonction de l'utilisation du produit de l'invention.

Dans le cas particulier d'utilisation dans la constitution de corps de chaussée en couche dite de fondation et/ou de base, le produit de l'invention après régalage et nivellement avec des moyens classiques est compacté efficacement afin de permettre la prise en masse du liant et des mâchefers d'incinération d'ordures ménagères.

Les caractéristiques mécaniques obtenues en laboratoire sur le produit de la présente invention montrent que ce produit se situe au même seuil que certaines graves-émulsions.

Ainsi, à titre d'exemple, le produit de la présente invention dosé à 5,5% de liant présente une résistance à la compression de 2,4 à 3 MPa après 14 jours de conservation dans l'air et sensiblement les deux tiers de ces valeurs après une conservation de sept jours dans l'air et de sept jours dans l'eau.

L'analyse chimique des mâchefers d'incinération d'ordures ménagères avant déferraillage fait apparaître un pourcentage de scories (chaux et silice) voisin de 90% en poids sec et un pourcentage de métaux de l'ordre de 10%. Le pH du matériau sortant du four est basique, sensiblement de l'ordre de 10 à 12, et se modifie jusqu'à la neutralité après stockage prolongé.

Pour tenir compte des normes en vigueur, les mâchefers d'incinération d'ordures ménagères sont traités afin d'avoir une teneur en ferraille inférieure à 2%, une teneur en eau d'environ 15%, une teneur en imbrûlés inférieure à 5%, leur granulométrie est sensiblement comprise entre 1 et 40 mm et il n'y a pas de réintroduction des fumées de dépoussièrage et de certaines cendres.

Un liant bitumineux qui a donné des résultats particulièrement appropriés est le liant dénommé STABICOL R provenant de la Société COLAS.

Un autre liant à froid particulièrement convenable est l'émulsion dénommée LIVAMIOM provenant de la société L.T.R. La Technologie Routière.

Comme l'homme du métier le comprendra aisément l'application d'un liant à froid procure un avantage économique considérable.

## Revendications

1. Produit destiné à la construction de corps de chaussées, constitué de résidus d'incinération d'ordures ménagères enrobés avec un liant bitumineux sous la forme d'une émulsion aqueuse, la teneur en liant étant comprise dans la gamme d'environ 5 à 10% en poids, de préférence de l'ordre de 5,5%, caractérisé en ce que les résidus d'incinération d'ordures ménagères ont une teneur en eau d'au moins 15% en poids.

2. Produit selon la revendication 1, caractérisé en ce qu'il renferme, en outre, du sable ou des gravillons.

3. Produit selon la revendication 1 ou 2 caractérisé en ce que la pénétrabilité du bitume se situe dans la gamme de 30/100 à 200/100.

4. Produit selon l'une quelconque des revendications 1 à 3, caractérisé en ce que la teneur en eau de l'émulsion bitumineuse est comprise entre environ 25% et environ 50% en poids.

5. Produit selon l'une quelconque des revendications 1 à 4, caractérisé en ce que l'émulsion bitumineuse renferme, en outre, un additif hydraulique sous forme liquide.

6. Produit selon l'une quelconque des revendications 1 à 5, caractérisé en ce qu'il présente une résistance à la compression d'environ 2,4 à 3 MPa.

7. Produit selon l'une quelconque des revendications 1 à 6, caractérisé en ce qu'il est sous la forme de pastilles d'une granulométrie comprise dans la gamme d'environ 1 à 40 mm.

8. Procédé de traitement de résidus d'incinération d'ordures ménagères pour l'obtention d'un produit selon la revendication 1 destiné à la construction de corps de chaussées comprenant les étapes consistant à :
a) introduire les résidus dans un dispositif de dosage ;
b) amener les résidus dosés dans un malaxeur ;
c) incorporer à froid un liant bitumineux dans le malaxeur ;
d) malaxer l'ensemble pendant une durée suffisante pour obtenir un enrobage uniforme ;
e) décharger le produit résistant pour son utilisation ultérieure.

9. Procédé selon la revendication 8, caractérisé en ce qu'il comprend, en outre, les étapes préalables consistant à :
a₁) prélever lesdits résidus à la sortie des fours d'incinération ;
a₂) stocker ces résidus jusqu'à leur refroidissement complet.

10. Procédé selon la revendication 8, caractérisé en ce qu'on incorpore, en outre, des produits pulvérulents dans les résidus d'incinération d'ordures ménagères avant l'introduction du liant.

11. Procédé selon la revendication 10, caractérisé en ce que les produits pulvérulents sont de la chaux, du ciment, des cendres hydrauliques, des charges calcaires, des charges de roches massives, du sable, du gravier.

12. Procédé selon l'une quelconque des revendications 8 à 11, caractérisé en ce que le malaxage des résidus dosés avec le liant est effectué énergiquement pendant un cycle bref d'environ 10 à environ 30 secondes.

## Patentansprüche

1. Produkt für den Bau von Straßenkörpern, bestehend aus mit einem bitumenhaltigen Bindemittel in Form einer wässrigen Emulsion umhüllten Rückständen von Stadtmüllverbrennung, wobei der Bindemittelgehalt im Bereich zwischen ungefähr 5 und 10 Gewichtsprozent liegt, vorzugsweise in der Größenordnung von 5,5%, dadurch gekennzeichnet, daß die Rückstände von Stadtmüllverbrennung einen Wassergehalt von mindestens 15 Gewichtsprozent aufweisen.

2. Produkt nach Patentanspruch 1, dadurch gekennzeichnet, daß es außerdem Sand oder Splitt enthält.

3. Produkt nach Patentanspruch 1 oder 2, dadurch gekennzeichnet, daß die Penetration des Bitumens im Bereich zwischen 30/100 und 200/100 liegt.

4. Produkt nach irgendeinem der Patentansprüche 1 bis 3, dadurch gekennzeichnet, daß der Wassergehalt der Bitumenemulsion zwischen ungefähr 25 und ungefähr 50 Gewichtsprozent liegt.

5. Produkt nach irgendeinem der Patentansprüche 1 bis 4, dadurch gekennzeichnet, daß die Bitumenemulsion außerdem einen hydraulischen Zusatz in flüssiger Form enthält.

6. Produkt nach irgendeinem der Patentansprüche 1 bis 5, dadurch gekennzeichnet, daß es eine Druckfestigkeit von ungefähr 2,4 bis 3 MPa aufweist.

7. Produkt nach irgendeinem der Patentansprüche 1 bis 6, dadurch gekennzeichnet, daß es in Form von Tabletten einer Korngröße im Bereich von ungefähr 1 bis 40 mm vorliegt.

8. Verfahren zur Behandlung von Rückständen aus Stadtmüllverbrennung zur Herstellung eines Produktes für den Bau von Straßenkörpern nach Patentanspruch 1, die Schritte umfassend, die darin bestehen
a) die Rückstände in eine Dosiervorrichtung einzubringen,
b) die dosierten Rückstände in einen Zwangsmischer zu bringen,
c) ein bitumenhaltiges Bindemittel kalt in den Zwangsmischer einzuführen,
d) das Ganze während eines hinreichend langen Zeitraums zwangszumischen, um eine gleichmäßige Umhüllung zu erhalten,
e) das feste Produkt für seine spätere Verwendung zu entladen.

9. Verfahren nach Patentanspruch 8, dadurch gekennzeichnet, daß es außerdem vorausgehend die Schritte umfaßt, die darin bestehen
a₁) die genannten Rückstände bei Austritt aus den Verbrennungsöfen zu entnehmen,
a₂) diese Rückstände bis zu ihrer vollständigen Abkühlung zu lagern.

10. Verfahren nach Patentanspruch 8, dadurch gekennzeichnet, daß außerdem vor Einbringen des Bindemittels den Rückständen von Stadtmüllverbrennung pulverförmige Produkte zugesetzt werden.

11. Verfahren nach Patentanspruch 10, dadurch gekennzeichnet, daß es sich bei den pulverförmigen Produkten um Kalk, Zement, hydraulische Aschen, kalkhaltige Füllstoffe, Füllstoffe aus massivem Festgestein, Sand, Kies handelt.

12. Verfahren nach irgendeinem der Patentansprüche 8 bis 11, dadurch gekennzeichnet, daß das Zwangsmischen der dosierten Rückstände mit dem Bindemittel in einem kurzen Zyklus von ungefähr 10 bis ungefähr 30 Sekunden energisch erfolgt.

## Claims

1. A product designed for the building of road foundations, constituted of municipal incinerator residues coated with a bituminous binder in the form of an aqueous emulsion, whereby the binder content ranges between 5 and 10% in weight, preferably in the order of 5.5%, characterised in that the municipal incinerator residues exhibit a water content of at least 15% in weight.

2. A product according to claim 1, characterised in that it contains, moreover, sand or chippings.

3. A product according to claim 1 or 2, characterised in that the penetrability of bitumen lies within the range of 30/100 to 200/100.

4. A product according to any of the claims 1 to 3, characterised in that the water content of the bituminous emulsion ranges between approximately 25% and 50% in weight.

5. A product according to any of the claims 1 to 4, characterised in that the bituminous emulsion contains, moreover, a hydraulic additive in liquid form.

6. A product according to any of the claims 1 to 5, characterised in that it exhibits a compression resistance of approx. 2.4 to 3 MPa.

7. A product according to any of the claims 1 to 6, characterised in that it is in the form of pellets with a granulometry ranging between 1 and 40 mm.

8. A method for processing municipal incinerator residues in order to obtain a product according to claim 1 designed for the building of road foundations, comprising the following stages :
a) injection of the residues in a dosing device;
b) bringing the residues thus dosed into a mixer;
c) cold integration of a bituminous binder into the mixer;
d) mixing the compound for sufficient duration in order to obtain a uniform coating;
e) removing the resisting product for future use.

9. A process according to claim 8, characterised in that it also comprises the prior stages consisting in :
a1) collecting the residues at the outlet of the incinerator furnaces;
a2) storing the said residues until completely cooled down.

10. A process according to claim 8, characterised in that, moreover, powdery products are incorporated into the municipal incinerator residues before injecting the binder.

11. A process according to claim 10, characterised in that the powdery products are lime, cement, hydraulic ashes, clay charges, massive rock charges, sand, chippings.

12. A process according to any of the claims 8 to 11, characterised in that the mixing of the residues after dosage with the binder is performed energetically for a short period of 10 to approx. 30 seconds.
